# EUROPÄISCHE PATENTSCHRIFT

(11) **EP 4 232 343 B1**
(45) Veröffentlichungstag und Bekanntmachung des Hinweises auf die Patenterteilung: **30.04.2025**
(21) Anmeldenummer: 21740503.4
(22) Anmeldetag: 08.07.2021
(51) Int. Cl.: B62B 5/06, F16B 7/04

(54) **GRIFFKAPPE**
CAP FOR A HANDLE
CAPUCHON DE POIGNÉE

(30) Priorität: 26.10.2020 DE 102020128099
(43) Veröffentlichungstag der Anmeldung: 30.08.2023
(73) Patentinhaber: Wanzl GmbH & Co. KGaA, 89340 Leipheim (DE)
(72) Erfinder: DAMINGER, Johann, 89223 Neu-Ulm, Burlafingen (DE); MÜLLER, Gerhard, 89343 Jettingen-Scheppach (DE)
(86) Internationale Anmeldenummer: PCT/EP2021/068929
(87) Internationale Veröffentlichungsnummer: WO 2022/089792

(56) Entgegenhaltungen:
- EP-A2- 0 351 232
- DE-A1- 10 035 061
- DE-A1- 19 830 297
- DE-A1- 3 044 581
- GB-A- 2 014 527

## Beschreibung

Die vorliegende Erfindung betrifft eine Griffkappe eines Einkaufswagens, eine Schiebegriffeinheit eines Einkaufswagens und einen Einkaufswagen.

Im Stand der Technik ist beispielsweise die EP 0515979 A1 bekannt, die eine Schraubverbindung einer Griffkappe mit einem Griffbügel eines Einkaufswagens beschreibt. Außerdem zeigen die DE 9313499 U1 und die EP 0844592 A2 zwei Griffkappen, die mit einem Handbügel verschraubt werden. Die GB 2014527 A und die DE 198 30 297 A1 zeigen weitere Schiebegriffeinheiten.

Eine Griffkappe stellt ein Verbindungselement zwischen einem Einkaufswagen und einem Handlauf bzw. Griffbügel dar. Zwei Griffkappen werden an einem Griffbügel an dessen Enden montiert und ergeben so eine Schiebegriffeinheit oder ein Teil einer Schiebegriffeinheit eines Einkaufswagens.

Typischerweise werden die Griffkappen an den Griffbügel geschraubt. Eine Montage einer Schiebegriffeinheit ist daher zeitaufwändig.

Eine Aufgabe der Erfindung ist daher, eine Griffkappe, eine Schiebegriffeinheit und einen Einkaufswagen zur Verfügung zu stellen, sodass die Montage einer Griffkappe an einen Griffbügel zeitlich schnell vorgenommen werden kann.

Diese Aufgabe wird erfindungsgemäß durch eine Schiebegriffeinheit nach Anspruch 1 gelöst. Bevorzugte Ausführungen ergeben sich aus den abhängigen Ansprüchen.

Es wird eine Griffkappe als seitlicher Abschluss einer Schiebegriffeinheit eines Einkaufswagens zur Verfügung gestellt, die die Verbindung eines Griffbügels mit einem Einkaufswagen herstellt, wobei die Griffkappe ein erstes Element aufweist, das mit einem zweiten Element des Griffbügels eine lösbare oder unlösbare Verbindung ermöglicht, wobei das erste oder das zweite Element ein Federelement ist.

Durch das Ersetzen der Schraubverbindung durch eine Federelementverbindung kann die Montagezeit verkürzt werden, wodurch sich die Produktivität steigern lässt. Durch das Einführen des Federelements der Griffkappe in den Griffbügel schnappt das Federelement in eine Drahtschlaufe und eine lösbare oder unlösbare Verbindung zwischen der Griffkappe und dem Griffbügel ergibt sich.

Es wird eine Schiebegriffeinheit zum Anordnen an einen Einkaufswagen zur Verfügung gestellt, umfassend eine Griffkappe und einen Griffbügel, wobei an einem Ende des Griffbügels eine Griffkappe derart angeordnet ist, dass das erste Element mit dem zweiten Element eine lösbare Verbindung herstellt.

Es wird ein Einkaufswagen zur Verwendung in einem Einkaufsladen oder Supermarkt zur Verfügung gestellt, umfassend eine solche Schiebegriffeinheit.

Beispielhafte Ausführungsformen werden in den abhängigen Ansprüchen beschrieben.

Es wird eine Griffkappe zur Verfügung gestellt, wobei das erste oder das zweite Element 2, 3, 4, 5 oder beliebig viele Federelemente aufweist.

Mit mehreren Federelementen kann eine Clipvorrichtung ermöglicht werden.

In einer noch weiteren Ausführungsform wird eine Griffkappe zur Verfügung gestellt werden, wobei das erste Element ein Federelement ist und das zweite Element eine Drahtschlaufe ist oder wobei das erste Element eine Drahtschlaufe ist und das zweite Element ein Federelement.

Eine Drahtschlaufe stellt ein komplementäres Element dar, das zusammen mit einem Federelement als Clipverbindung wirken kann.

Gemäß einer beispielhaften Ausführungsform wird eine Schiebegriffeinheit zur Verfügung gestellt, umfassend eine Griffkappe und einen Griffbügel, wobei in der Griffkappe 2, 3, 4, 5 oder beliebig viele Federelemente angeordnet sind, wobei die Federelemente in 1, 2, 3, 4, 5 oder beliebig viele Drahtschlaufen des Griffbügels eingreifen.

In einer weiteren Ausführungsform wird eine Schiebegriffeinheit zur Verfügung gestellt, umfassend eine Griffkappe und einen Griffbügel, wobei in dem Griffbügel 2, 3, 4, 5 oder beliebig viele Federelemente angeordnet sind, wobei die Federelemente in 1, 2, 3, 4, 5 oder beliebig viele Drahtschlaufen der Griffkappe eingreifen.

Ein Federelement kann einer Drahtschlaufe als Clipverbindung zugeordnet werden. Alternativ können 2, 3 oder mehrere Federelemente in eine einzelne Drahtschlaufe eingeführt werden und zu einer Clipverbindung führen.

Gemäß einem weiteren Ausführungsbeispiel wird eine Schiebegriffeinheit zur Verfügung gestellt, umfassend zwei Griffkappen und einen Griffbügel, wobei die Schiebegriffeinheit den Griffbügel umfasst, der an den jeweiligen Enden eine Griffkappe aufweist oder wobei die Schiebegriffeinheit zwei Griffkappen und zwei Griffbügel aufweist.

In einer noch weiteren erfindungsgemäßen Ausführungsform wird eine Griffkappe zur Verfügung gestellt werden, wobei die Griffkappe einen haltenden Abschnitt und eine Einführschräge mit Hinterschnitt innerhalb der Ausnehmung aufweist, um ein federndes Teil eines Einkaufswagens in die Griffkappe einzuclipsen.

Gemäß einer außerdem beispielhaften Ausführungsform der Erfindung wird eine Griffkappe zur Verfügung gestellt, wobei die Griffkappe einen Hinterschnitt aufweist, damit eine Sicke des Griffbügels in den Hinterschnitt einclipst.

Greift eine Sicke des Griffbügels in den Hinterschnitt der Griffkappe, so wird die mechanische Stabilität der Verbindung Griffkappe-Griffbügel deutlich erhöht.

Als eine Idee der Erfindung kann angesehen werden, eine Griffkappe einer Schiebegriffeinheit eines Einkaufswagens bereit zu stellen, die an einen Griffbügel, als weiteres Element einer Schiebegriffeinheit, nicht angeschraubt wird, sondern in diesen eingeclipst wird. Hierzu werden an der Griffkappe oder alternativ an dem Griffbügel mehrere Federelemente angeordnet, die in eine komplementäre Aufnahmevorrichtung in dem Griffbügel oder der Griffkappe eingeführt und eingeclipst werden können.

Weitere Einzelheiten und Vorteile der Erfindung werden anhand der in den Zeichnungen dargestellten Ausführungsbeispiele deutlich. Es zeigen
- Fig. 1: eine erfindungsgemäße Griffkappe 2 mit einem Federelement 1 statt einer Griffrohrschraube,
- Fig. 2: dieselbe erfindungsgemäße Griffkappe 2 in einer Längsschnittdarstellung mit den Federelementen 1,
- Fig. 3: dieselbe erfindungsgemäße Griffkappe 2 in einer seitlichen Schnittdarstellung mit einem Teil eines Einkaufswagens 5,
- Fig. 4: dieselbe erfindungsgemäße Griffkappe 2 in einer Ansicht von oben mit den Federelementen 1,
- Fig. 5: dieselbe erfindungsgemäße Griffkappe 2 mit der Ausnehmung 3, in die ein Teil eines Einkaufswagens eingeführt werden kann,
- Fig. 6: dieselbe erfindungsgemäße Griffkappe 2 in einer perspektivischen Darstellung mit den Federelementen 1,
- Fig. 7: dieselbe erfindungsgemäße Griffkappe 2 in einer seitlichen Ansicht,
- Fig. 8: einen Einkaufswagen mit zwei erfindungsgemäßen Griffkappen 2, die mit einem Griffbügel 6 verbunden sind,
- Fig. 9: denselben Einkaufswagen in einer seitlichen Darstellung,
- Fig. 10: eine Griffkappe 2 mit Federelementen 1, die in einen Griffbügel 6 eingreifen und einer Ausnehmung 3 zur Aufnahme von federnden Teilen 5 eines Einkaufswagens,
- Fig. 11: die erfindungsgemäße Griffkappe 2,
- Fig. 12: ein federndes Teil 5 eines Einkaufswagens, das in eine Griffkappe 2 eingeführt wird, wobei es in dem vorderen Bereich des federnden Teils 5 durch den vorderen Abschnitt 8 (gesehen von der Ausnehmung 3) der Griffkappe 2 gehalten wird und im hinteren Abschnitt der Griffkappe 2 (gesehen von der Ausnehmung 3) beim Einführen in die Ausnehmung 3 durch eine Einführschräge 4 zunächst aus seiner Längsrichtung gedrückt wird und in seiner Endposition nach Überwinden der Einführschräge 4 federnd einclipst,
- Fig. 13: die Griffkappe 2 mit den Federelementen 1 beim Einführen in einen Griffbügel 6 und
- Fig. 14: den in die Griffkappe 2 eingefahrenen Griffbügel 6.

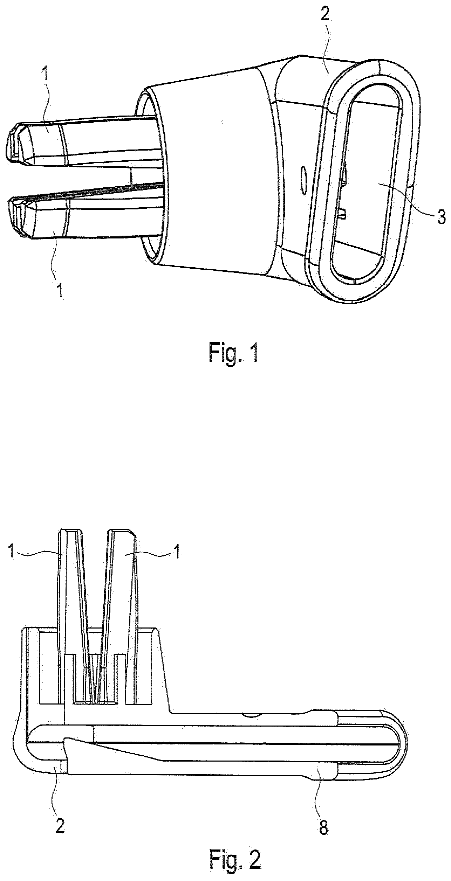

Fig. 1 zeigt eine erfindungsgemäße Griffkappe 2 mit Federelementen 1, das eine Ausnehmung 3 aufweist, um an einem Einkaufswagen montiert zu werden. Das Federelement 1 dient dazu, in den Griffbügel eines Einkaufswagens eingeführt zu werden. In dem Griffbügel ist beispielsweise eine Drahtschlaufe enthalten, in die das Federelement 1 einschnappt und damit eine lösbare oder unlösbare Verbindung schafft und damit einen Teil eines fertig montierten Griffrohrs eines Einkaufswagens bereitstellt.

Fig. 2 zeigt die Griffkappe 2 mit Federelementen 1 in einer seitlichen Schnittdarstellung. Die Griffkappe 2 weist Federelemente 1 auf, die in einen Griffbügel eingeführt werden, wobei die Federelemente 1 der Griffkappe 2 in eine oder mehrere Drahtschlaufen des Griffbügels eingeführt werden können und in einer Endposition einclipsen. Hierdurch ergibt sich eine lösbare, feste Verbindung zwischen der Griffkappe 2 und dem Griffbügel. In einer alternativen Ausführungsform kann in dem Griffbügel ein oder mehrere Federelemente 1 angeordnet werden, die in eine oder mehrere Drahtschlaufen bzw. ähnliche, komplementäre Aufnahmeelemente eingeführt und dann in diesen gehalten werden können. Ein Griffbügel stellt einen Teil eines Handgriffs bzw. einer Schiebegriffeinheit eines Einkaufswagens dar. In einer alternativen Ausführungsform ist der Griffbügel der Handgriff bzw. die Schiebegriffvorrichtung des Einkaufswagens.

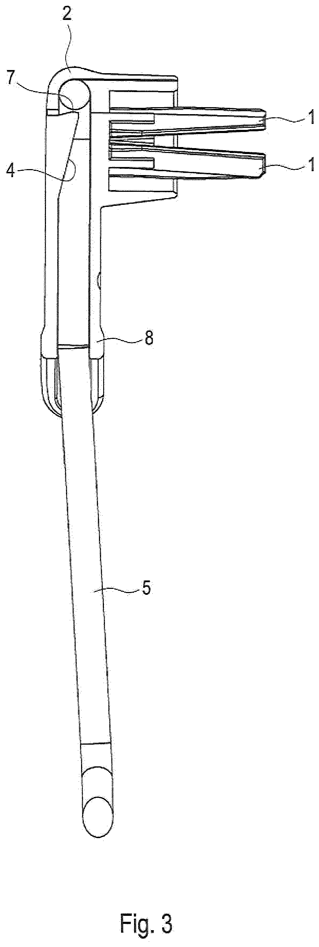

Fig. 3 zeigt die Griffkappe 2 mit den Federelementen 1 in einer seitlichen teilweisen Schnittdarstellung mit einem Teil des Einkaufswagens 5.

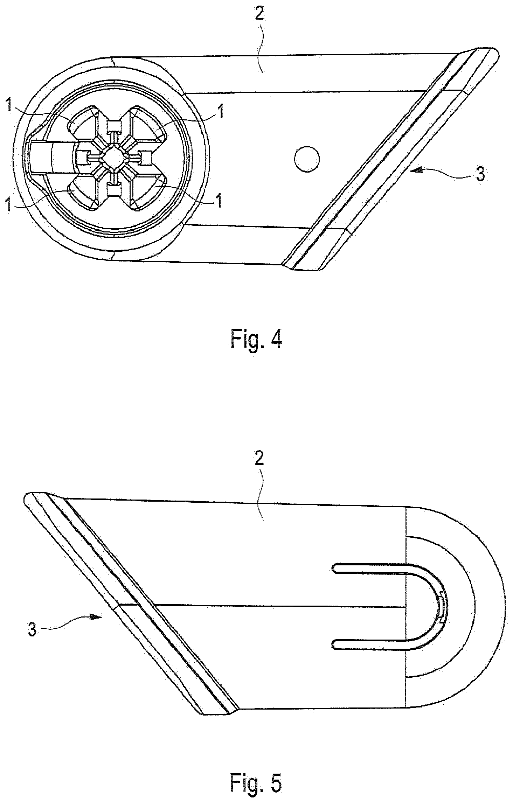

Fig. 4 zeigt die erfindungsgemäße Griffkappe 2 in einer Draufsicht mit den Federelementen 1.

Fig. 5 zeigt die Griffkappe 2 in einer Rückansicht mit der Ausnehmung 3 zur Aufnahme eines Teils eines Einkaufswagens.

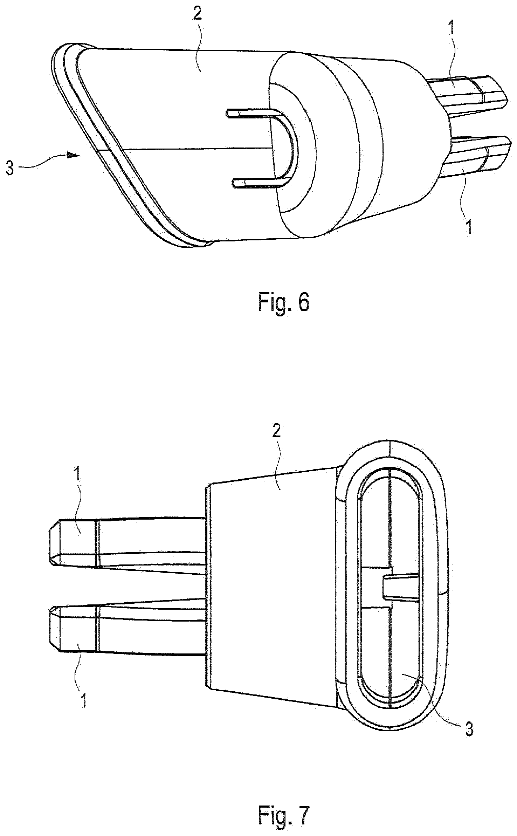

Fig. 6 zeigt die Griffkappe 2 in einer perspektivischen Darstellung mit den Federelementen 1 und der Ausnehmung 3. Die Griffkappe 2 stellt ein Eckstück dar, das eine Verbindung zu einem Griffbügel und einem Einkaufswagen herstellt. Erfindungsgemäß wird eine Möglichkeit der Verbindung der Griffkappe 2 mit einem Griffbügel zur Verfügung gestellt, sodass eine schnelle Montage ermöglicht wird. Hierbei wird ein Einclipsen der Griffkappe 2 in einen Griffbügel bzw. ein Einclipsen des Griffbügels in eine Griffkappe 2 ermöglicht. Eine Schraubverbindung wird durch diese Clipverbindung vorteilhafterweise ersetzt, denn die Montage einer Schraubverbindung stellt einen zeitlich aufwändigen Arbeitsschritt dar.

Fig. 7 zeigt die Griffkappe 2 mit der Ausnehmung 3 und den Federelementen 1.

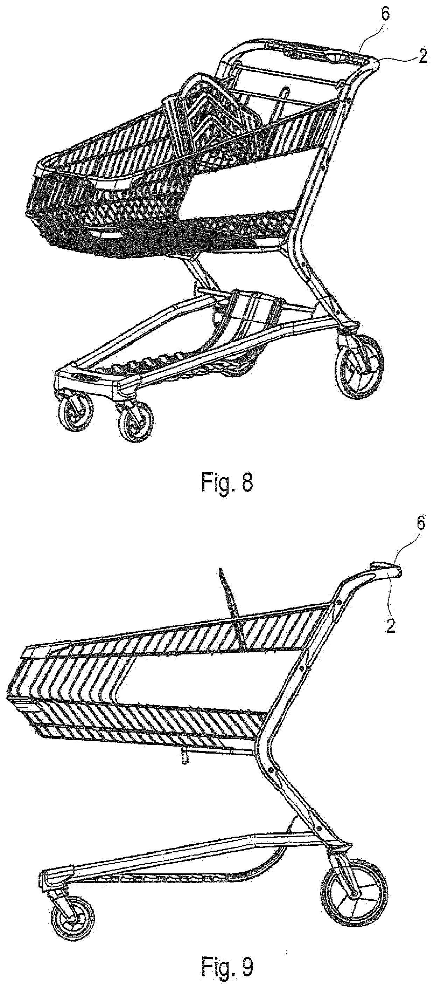

Fig. 8 zeigt einen Einkaufswagen mit einer Griffkappe 2, deren Federelement in einem Griffbügel 6 eingeführt ist.

Fig. 9 zeigt einen Einkaufswagen mit einer Griffkappe 2.

Erfindungsgemäß wird eine Schraubverbindung zwischen einer Griffkappe 2 und einem Griffbügel 6 durch eine Clipverbindung ersetzt. Griffkappe 2 und Griffbügel 6 stellen einen Teil einer Schiebegriffeinheit eines Einkaufswagens dar. Als Clipvorrichtung wird insbesondere ein oder mehrere Federelemente 1 an der Griffkappe 2 oder an dem Griffbügel 6 angeordnet. In dem Griffbügel 6 oder der Griffkappe 2 wird das komplementäre Aufnahmeelement, beispielsweise eine Drahtschlaufe, angeordnet. Ein Federelement 1 kann für eine Drahtschlaufe oder mehrere Federelemente 1 können für eine einzelne Drahtschlaufe vorgesehen sein. Beispielsweise können in einer Griffkappe 2 mehrere Federelemente 1 vorgesehen sein, die in eine oder mehrere Drahtschlaufen eingeführt werden können, die in dem Griffbügel 6 angeordnet sind.

Eine Griffkappe 2 kann, wie ein Griffbügel 6, als Teil einer Schiebegriffeinheit eines Einkaufswagens aufgefasst werden. Eine Griffkappe 2 stellt ein Winkelstück dar, das eine "Umlenkung" der Schiebegriffeinheit in einer Weise darstellt, dass die Schiebegriffeinheit mit dem Einkaufswagen verbunden werden kann. Typischerweise umfasst eine Schiebegriffeinheit zwei Griffkappen 2, die den jeweiligen seitlichen Abschluss der Schiebegriffeinheit darstellen. Außerdem weist eine Schiebegriffeinheit einen oder zwei Griffbügel 6 auf. Die Griffbügel 6 stellen insbesondere eine Greiffläche zur Verfügung, um den Einkaufswagen schieben zu können.

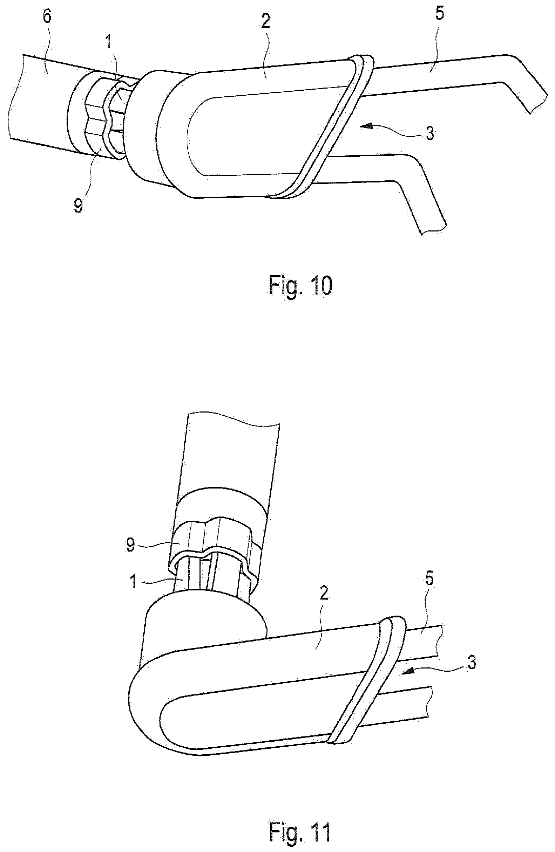

Fig. 10 zeigt eine Griffkappe 2 mit Federelementen 1, die in einen Griffbügel 6 eingeführt werden. Außerdem kann in die Ausnehmung 3 ein Teil 5 des Einkaufswagens eingeführt werden, sodass der Griffbügel 6 an dem Einkaufswagen befestigt ist.

Fig. 11 zeigt die Federelemente 1, die in den Griffbügel 6 eingeführt werden können. Außerdem werden die Teile 5 des Einkaufswagens zumindest teilweise von der Griffkappe 2 aufgenommen.

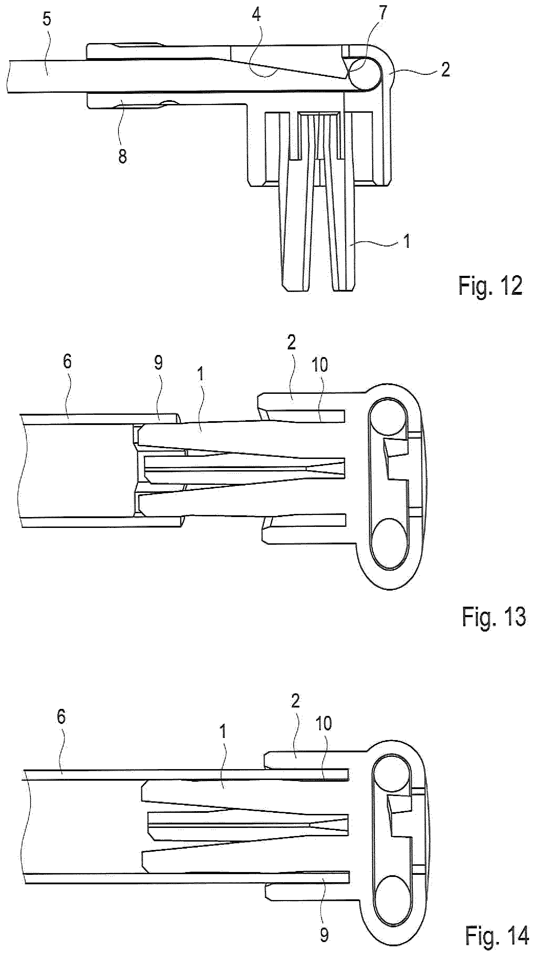

Fig. 12 zeigt die Griffkappe 2 mit Federelementen 1. Außerdem sind Teile 5 des Einkaufswagens als federnde Elemente ausgebildet, die beim Einführen in die Ausnehmung 3 zum einen durch den vorderen Teil 8 der Griffkappe 2 (gesehen von der Ausnehmung aus) in ihrer Längsachse ausgerichtet werden und durch eine Einführschräge 4 aus dieser Richtung federnd gedrückt werden. Erreicht der vordere Abschnitt des federnden Teils 5 seine Endposition kann er sich entsprechend der durch den Abschnitt 8 der Griffkappe 2 erzwungenen Längsrichtung ausrichten und schnappt in eine Aufnahme der Griffkappe 2. Der Hinterschnitt 7 der Einführschräge 4 verhindert ein Herausfallen des Teils 5 des Einkaufswagens aus der Griffkappe 2.

Fig. 13 zeigt die Griffkappe 2, die in einen Griffbügel 6 eingeführt wird.

Fig. 14 zeigt die eingefahrenen Federelemente 1 in den Griffbügel 6. Der Griffbügel 6 weist in einer alternativen Ausführungsform eine oder mehrere Sicken 9 auf, die in komplementäre Hinterschnitte 10 der Griffkappe 2 eingreifen können und damit die mechanische Stabilität erhöhen.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Federelement
- 2: Griffkappe
- 3: Ausnehmung zur Aufnahme eines Teils eines Einkaufswagens
- 4: Einführschräge
- 5: Teil eines Einkaufswagens
- 6: Griffbügel/Handlauf
- 7: Hinterschnitt
- 8: Abschnitt der Griffkappe, der den Teil 5 des Einkaufswagens in seiner Längsachse hält
- 9: Sicke
- 10: Hinterschnitt

## Patentansprüche

1. Schiebegriffeinheit (2, 6) zum Anordnen an einen Einkaufswagen, umfassend
einen Griffbügel (6) und
eine Griffkappe (2) als seitlicher Abschluss der Schiebegriffeinheit des Einkaufswagens, die die Verbindung des Griffbügels (6) mit dem Einkaufswagen herstellt, wobei die Griffkappe (2) ein erstes Element aufweist, das mit einem zweiten Element des Griffbügels (6) eine lösbare oder unlösbare Verbindung ermöglicht, **dadurch gekennzeichnet, dass** das erste Element 2, 3, 4, 5 oder beliebig viele Federelemente (1) aufweist und das zweite Element eine Drahtschlaufe ist oder dass das erste Element eine Drahtschlaufe ist und das zweite Element 2, 3, 4, 5 oder beliebig viele Federelemente (1) aufweist.

2. Schiebegriffeinheit (2, 6) nach Anspruch 1, wobei die Griffkappe (2) einen haltenden Abschnitt (8) und eine Einführschräge (4) mit Hinterschnitt (7) innerhalb der Ausnehmung (3) aufweist, um ein federndes Teil (5) eines Einkaufswagens in die Griffkappe (2) einzuclipsen.

3. Schiebegriffeinheit (2, 6) nach einem der vorhergehenden Ansprüche, wobei die Griffkappe (2) einen Hinterschnitt (10) aufweist, damit eine Sicke (9) des Griffbügels (6) in den Hinterschnitt (10) einclipst.

4. Einkaufswagen zur Verwendung in einem Einkaufsladen oder Supermarkt umfassend eine Schiebegriffeinheit nach einem der Ansprüche 1 bis 3

## Claims

1. Pushing handle unit (2, 6) for arrangement on a shopping trolley, comprising
a curved hand grip (6) and
a handle cap (2) in the form of a lateral closure of the pushing handle unit of the shopping trolley which produces the connection of the curved hand grip (6) with respect to the shopping trolley, wherein the handle cap (2) has a first element which enables a releasable or non-releasable connection with a second element of the curved hand grip (6), **characterized in that** the first element has 2, 3, 4, 5 or any number of resilient elements (1) and the second element is a wire loop or **in that** the first element is a wire loop and the second element has 2, 3, 4, 5 or any number of resilient elements (1).

2. Pushing handle unit (2, 6) according to Claim 1, wherein the handle cap (2) has a retaining portion (8) and an inclined introduction member (4) with an undercut (7) inside the recess (3) in order to clip-fit a resilient member (5) of a shopping trolley in the handle cap (2).

3. Pushing handle unit (2, 6) according to any one of the preceding claims, wherein the handle cap (2) has an undercut (10) so that a bead (9) of the curved hand grip (6) clip-fits in the undercut (10).

4. Shopping trolley for use in a shop or supermarket, comprising a pushing handle unit according to any one of Claims 1 to 3.

## Revendications

1. Ensemble (2, 6) formant poignée de poussée, destiné à être fixé sur un chariot d'achat, comprenant
une barre de préhension (6) et
un embout de poignée (2) servant de fermeture latérale de l'ensemble formant poignée de poussée du chariot d'achat, qui assure la liaison de la barre de préhension (6) au chariot, l'embout de poignée (2) présentant un premier élément qui permet une liaison amovible ou non amovible à un deuxième élément de la barre de préhension (6), **caractérisé en ce que** le premier élément comprend 2, 3, 4, 5 éléments élastiques (1), ou un nombre quelconque de ces éléments, et le deuxième élément est une boucle de fil métallique, ou **en ce que** le premier élément est une boucle de fil métallique et le deuxième élément comprend 2, 3, 4, 5 éléments élastiques (1) ou un nombre quelconque de ces éléments.

2. Ensemble (2, 6) formant poignée de poussée selon la revendication 1, dans lequel l'embout de poignée (2) présente une partie de maintien (8) et un biseau d'insertion (4) avec une contre-dépouille (7) à l'intérieur de l'évidement (3) pour encliqueter une partie élastique (5) d'un chariot d'achat dans l'embout de poignée (2).

3. Ensemble (2, 6) formant poignée de poussée selon l'une des revendications précédentes, dans lequel l'embout de poignée (2) présente une contre-dépouille (10) pour qu'un bourrelet (9) de la barre de préhension (6) s'encliquette dans la contre-dépouille (10).

4. Chariot d'achat destiné à être utilisé dans un magasin ou un supermarché, comprenant une ensemble formant poignée de poussée selon l'une des revendications 1 à 3.
